# EUROPEAN PATENT SPECIFICATION

(11) **EP 4 412 303 B1**
(45) Date of publication and mention of the grant of the patent: **22.07.2026**
(21) Application number: 23154943.7
(22) Date of filing: 03.02.2023
(51) Int. Cl.: H04W 76/11, H04W 28/088, H04L 67/563, H04W 76/22, H04L 61/2521, H04W 88/16, H04L 47/726, H04L 47/70, H04L 61/2592

(54) **STATELESS GTP-C PROXY MESSAGE HANDLING**
ZUSTANDSLOSE GTP-C-PROXY-NACHRICHTENVERARBEITUNG
GESTION DE MESSAGE PROXY GTP-C SANS ÉTAT

(43) Date of publication of application: 07.08.2024
(73) Proprietor: 1NCE GmbH, 50670 Cologne (DE)
(72) Inventor: ZVANCUKS, Dmitrijs, 1084 Riga (LV); KAMPANS, Ervins, 2163 Kalngale, Adazu novads (LV); KOHNENMERGEN, Dietmar, 41539 Dormagen (DE); SATOR, Alexander, 22765 Hamburg (DE); ALLAKI, Younes, 53229 Bonn (DE)
(74) Representative: Eisenführ Speiser

(56) References cited:
- WO-A1-2020/023511
- US-A1- 2017 142 613
- US-A1- 2019 373 506

## Description

### Field of the invention

The invention relates to a proxy device for the GTP protocol. The GTP protocol and mobile core architecture is standardized by the 3rd Generation Partnership Project (3GPP). A proxy device between gateways is not standardized by 3GPP. However, proxy devices are known, for further information it is, for example, referred to European patent application EP 20 206 283.2.

### Technical background of the invention

The GPRS tunnelling protocol (GTP) corresponds to an IP based communication protocol used to carry general packet radio service within networks based on the Global System for Mobile Communications (GSM), the Universal Mobile Telecommunications system (UMTS) and the Long Term Evolution (LTE) system. Hereby, GTP may be split into several protocols, depending on the plane in which the GTP is provided. In the control plane, GTP control (GTP-C) is used for signalling. In the user plane, GTP user (GTP-U) is provided for carrying user data.

Further, a protocol called GTP' (GTP prime) exists. This is a protocol largely separate from GTP that can be used with the User Datagram Protocol (UDP) and/or the Transmission Control Protocol (TCP). GTP' uses the same structure as GTP, i.e. also employs GTP-C and GTP-U.

GTP is used in mobile core networks, such as the one for General Radio Packet Services (GPRS), UTMS and/or LTE, for signalling between the serving GPRS support nodes (SGSN) (for GPRS and UMTS) or serving gateway (SGW) (for LTE) and the gateway GPRS support nodes (GGSN) (for GPRS and UMTS) or Packet Data Network Gateway (PGW) (for LTE). In the case of 5G core networks, GTP may also be employed for providing connections between the Access and Mobility Management Function (AMF), the Session Management Function (SMF) and the User Plane Function (UPF) which are more or less the equivalents to the SGSN/SGW and the GGSN/PGW in 5G.

The GTP-C control messages allow creating, modifying and/or deleting a user session and establishing a Packet Data Protocol (PDP) context between the participating gateways on the control plane. This encompasses establishing tunnel connections between the participating gateways. These tunnel connections are assigned to particular sessions and/or a particular context created by respective create session/context request and/or response messages as defined, for example, in 3GPP TS 23.401. This, in turn, allows moving towards the user plane, implemented by the GTP-U part of GTP. Using GTP-U, a GTP-U tunnel may be created and/or deleted. Via these tunnels, user data may then be carried within the core network.

In accordance with the GTP protocol there are initial messages that establish the tunnel connection and subsequent messages that are associated with the previously established tunnel connection. Each tunnel can be identified by respective tunnel end point identifiers. A tunnel end point identifier (TEID) is defined for each end point of the tunnel connection. There may be different TEIDs for the control and user plane, namely the TEID-c and TEID-u. Accordingly, a GTP tunnel may be defined by four TEIDs, for example, a TEID-c and a TEID-u for the first device at which the tunnel starts or ends and a TEID-c and TEID-u for the second device which is connected with the first device via the tunnel connection.

To establish a tunnel connection the devices connected with such tunnel connection have to exchange the respective TEIDs. This exchange is done with initial messages. The GTP protocol defines a create PDP context/session request message and a create PDP context/session response message. In accordance with the GTP protocol these messages have a header tunnel end point identifier (TEID) and may carry additional information fields. When establishing a new connection a first device sends a create PDP context/session request message which header TEID is set to zero and which carries origin TEIDs which are set to the TEIDs of the new connection defined by the first device which requests the new connection.

For example: A Initial Create PDP context/session request message from a SGSN/SGW to a GGSN or PGW has a header TEID equal to zero and the origin TEIDs set to the TEID-c and TEID-u of the tunnel connection at the SGSN/SGW.

The second device, to which the create PDP context/session request message is sent, accordingly receives the TEID-c and TEID-u for the new connection of the first device. In response the second device defines TEID-c and TEID-u for the new connection and sends a create PDP context/session response message which carries the TEID-c of the first device as header TEID, allowing the first device to identify the response as a message of the requested tunnel. The response further carries the TEID-c and TEID-u of the second device as origin TEIDs.

For example: A initial Create PDP context/session response message from a PGW or GGSN to a SGSN/SGW has a header TEID set to the TEID-c of the SSGN/SGW and carries TEID-c and TEID-u of the GGSN/PGW as origin TEIDs.

Therefore, after receiving the response message, the first device knows the TEID-c and TEID-u of the second device associated with the requested tunnel. Thus, after exchange of the request and response message both devices know the TEID- c and TEID-u for the tunnel connection of the other device. The established tunnel is associated with these four TEIDs for the control and user plane.

To send a subsequent message from one device to another via an established GTP tunnel the header TEID of the subsequent message is set to the respective TEID of the destination device. For control messages the TEID-c of the destination device is used and for user plane messages the TEID-u of the destination device is used.

For example, a subsequent GTP message from SGSN/SGW to the GGSN/PGW has the header TEID set to the TEID-c of GGSN/PGW for the particular tunnel connection. Optionally the message may also have set the origin TEID-c and TEID-u information fields to the TEID- c and TEID-u of the SGSN/SGW for this tunnel connection.

For example, a subsequent GTP message from a GGSN/PGW to the SGSN/SGW has the header TEID set to the TEID-c of SGSN/SGW for the particular tunnel connection. Optionally the message may also have set the origin TEID-c and TEID-u information fields to the TEID- c and TEID-u of the GGSN/PGW for this tunnel connection.

As appreciable from the above, the GTP protocol is connection-oriented, wherein a connection is inter alia defined by the TEIDs, and, thus, needs to remember and consider the transient states of the respective connection during the complete connection cycle. To put differently, in order for the GTP protocol to work, it is necessary to store the connection states, i.e. setup, change, active, closing, closed, for each connection. This necessity to maintain states makes the GTP protocol unsuitable for being used in cloud environments as such cloud-native approaches are naturally stateless.

As a further issue, there is currently no standardized definition and description of how a GTP Proxy provided between the end points, in particular gateways, shall be implemented. Instead, there exist a number of proprietary implementations of GTP proxying solutions that are traditionally implemented e.g. as a roaming hub, a firewall and/or a router. Unfortunately, these are usually implemented as hardware.

Further, some software proxy solutions exist, but these often suffer from a unified architecture and, thus, monolithic, state-based architecture, making them inflexible and susceptible to prolonged times for adding new features, due to the high component coupling therein.

For example, WO 2020/023511 A1 relates to systems and methods for intelligently managing sessions in a mobile network. A selection engine receives a trigger to select a peer node for a subscriber session. The selection engine chooses a peer selector among one or more available peer selectors in response to the trigger and determines whether the chosen peer selector is associated with a fully qualified domain name (FQDN). In response to determining that the chosen peer selector is associated with the FQDN, the selection engine determines whether a domain name system (DNS) server is configured. In response to determining that the DNS server is configured, the selection engine requests a peer list associated with the FQDN from the DNS server and selects the peer node from the peer list.

For example, it is referred to European patent application EP 20 206 283.2. Further, components in these systems are very difficult to be interchanged without affecting (or even damaging) the entire system. The monolithic nature may also mean that a proxy node failure may cause all previous transactions to be lost, meaning that, in case of a disaster, all connections will be lost. Therefore, horizontal scaling of the system comes with some drawbacks, e.g. it has to be ensured that the right GTP proxy handles the dedicated tunnel connection, since there is a fixed correlation between tunnel connection and serving GTP proxy. In case, this GTP proxy fails all existing sessions served by this dedicated GTP proxy are lost. Thus any meaningful improvement in performance may only be achieved using hardware vertical scaling. As a further drawback, in existing solutions, the GTP-C and GTP-U are typically provided as part of the same instance and, thus, interconnected with one another. All these drawbacks make the current software and/or hardware solutions for GTP proxies unsuitable for deployment in cloud environments.

However, using GTP in cloud environments is generally desirable due to its wide employment and the flexibility of such cloud environments.

A GTP proxy is an element sitting in between the SGSN/SGW and GGSN/PGW. A GTP proxy device may be used to provide a GTP firewall, a GTP router or a roaming hub. These solutions are highly specialized and based on traditional, hardware bound, and monolithic applications that are not suitable for cloud native deployments. A proxy device acts as an intermediary between two gateways by terminating a first GTP tunnel connection from a first gateway and establishing a second GTP tunnel connection to a second gateway. The proxy forwards messages from the first gateway received via the first tunnel connection to the second gateway via the second tunnel connection, for example based on the origin and destination IP addresses included in the GTP messages. In principle the proxy device creates the tunnel end point identifiers (TEID), which identify the tunnel end point for the control and user plane for a particular connection, to terminate a first tunnel connection and the proxy device creates new tunnel end point identifiers to setup a second tunnel connection. The proxy device connects both tunnel connections, which are identified by the respective TEIDs, afterwards. The proxy device stores information on both connections. The proxy device replaces the respective TEIDs within forwarded messages with the created TEIDs for the tunnel connection via which the message shall be forwarded. Thus, the proxy device allows to forward messages received via a first tunnel connection via a second, different tunnel connection. In addition the sequence number SEQ of a message may be replaced by new values generated of the by the proxy device. A tunnel connection is identified by the TEIDs and the IP addresses of the involved devices, which may be a SGSN/SGW, GGSN/PGW and the proxy device.

For example, to establish a connection between a SGSN/SGW and a GGSN/PGW via a proxy device a SGSN may send an initial create PDP context/session request message to the proxy device having a header TEID equal to zero and the origin TEID-c and TEID-u set to the TEIDs created by the SGSN/SGW for this connection.

The proxy device forwards the create PDP context/session request message but sets the origin TEID-c and TEID-u to the proxy device's TEID-c and TEID-u for a second connection between the proxy and the GGSN/PGW.

After receiving the create PDP context/session request message, the GGSN/PGW, thus knows the TEID-c and TEID-u of the proxy device for the connection between the GGSN/PGW and the proxy device.

The GGSN/PGW sends a create PDP context/session response message which carries the TEID-c of the proxy device for the connection between the proxy device and the GGSN/PGW as header TEID and the TEID-c and TEID-u of the GGSN/PGW for this connection as origin TEID-c and TEID-u.

After receiving the create PDP context/session response message, the proxy device, thus, knows the TEID-c and TEID-u of the GGSN/PGW for the connection between the proxy device and the GGSN/PGW.

The proxy device forwards the create PDP context/session response message to the SGSN/SGW by setting the header TEID to the TEID-c of the SGSN/SGW and the origin TEID-c and TEID-u to the TEID-c and TEID-u of the proxy device for the connection between the proxy device and the SGSN/SGW.

Accordingly, after the exchange of the initial messages the SGSN/SGW knows the TEID-c and TEID-u of the proxy device for the connection between the SGSN/SGW and the proxy device as well as its own TEID-c and TEID-u for the connection between the SGSN/SGW and the proxy device. Likewise the GGSN/PGW knows the TEID-c and TEID-u of the proxy device for the connection between the proxy device and the GGSN/PGW as well as its own TEID-c and TEID for this connection.

Further, the proxy device knows the respective TEIDs for both connections and can therefore communicate via a first tunnel connection with the SGSN/SGW and via a second tunnel connection with the GGSN/PGW. The SGSN/SGW does not have any information on the TEIDs of the GGSN/PGW. The GGSN/PGW does not have any information on the TEIDs of the SGSN/SGW.

A subsequent message sent from the SGSN/SGW carries the TEID-c of the proxy device as header TEID of the connection between the proxy device and the SGSN/SGW. Optionally, the message further carries the TEID-c and TEID-u of the SGSN/SGW for this connection.

A subsequent message from the proxy device to the GGSN/PGW carries the TEID- c of the GGSN/PGW as header TEID of the connection between the proxy device and the GGSN/PGW. Optionally, the message further carries the TEID-c and TEID-u of the proxy device for this connection.

A subsequent message sent from the GGSN/PGW to the proxy device carries the TEID-c of the proxy device as header TEID of the connection between the proxy device and the GGSN/PGW. Optionally, the message further carries the TEID-c and TEID-u of the GGSN/PGW for this connection.

A subsequent message from the proxy device to the SGSN/SGW carries the TEID- c of the SGSN/SGW as header TEID of the connection between the proxy device and the SGSN/SGW. Optionally, the message further carries the TEID-c and TEID-u of the proxy device for this connection.

Thus, a GTP tunnel is in principle established by exchanging the TEIDs of the devices between which the tunnel is established. Messages carry a TEID that indicates the destination TEID of the destination device as header TEID. Initial request and response messages may also carry the TEIDs of the user and control plane of the sending and/or destination device. Thus, a response can be sent back via the tunnel identified by these TEIDs, for example a response to a received message may be sent back having one of the transmitted control plane and user plane TEIDs received within the initializing message as header TEID. The message may also carry the IP addresses of the origin and destination device to allow for appropriate routing. A GTP tunnel is defined by four TEIDs, which corresponds to the two TEIDs for the control and user plane of each device. After an initial exchange of a request and a response message each participating device knows the respective TEIDs of its counterpart. That is the first gateway knows the IP addresses, TEIDS, of the second gateway and vice versa. In other words, the SGSN/SGW knows its own TEIDs and the TEIDs of the GGSN/PGW. Subsequent messages of the same tunnel connection accordingly carry the respective control plane related TEID of the destination device as header TEID. Thus, the destination device which receives the message associated the message with the respective tunnel connection.

In the traditional approach all transient states are stored within the SGSN/SGW/GGSN/PGW or the respective SGSN-c/SGW-c/GGSN-c/PGW-c e.g. the F-TEID, TEID; TEID-c, TEID-u, IP addresses and sequence numbers related to a tunnel connection. However, the respective user plane or control plane components may also only store the respective user plane or control plane state information, for example the SGSN-c/SGW-c/GGSN-c/PGW-c may store the TEID-c and the SGSN-u/SGW-u/GGSN-u/PGW-u may store the TEID-u. The traditional GTP approach is connection oriented and thus stateful. The respective unit, for example, GGSN has to remember and deal with the states of each connection, which is terminated or ends at this particular GGSN, therefore, other GGSNs cannot take over, since they have no information on the connection. This concept also applies to a GTP proxy, because there are two distinct GTP tunnel connections between which the proxy relays messages from a first gateway to a second gateway. Each tunnel connection is a GTP tunnel between one of the gateways and the proxy device. Accordingly, in case of a power outage or a failure state information is lost.

A proxy device can comprise distinct nodes, which are separated and are able to forward messages from one gateway to another. However, after a gateway has sent an initial message to one of the nodes, the state information is stored within that particular node. Thus, the tunnel connection always has to end at this node. The same applies to a tunnel established from said node, the tunnel end point is associated with the particular node and only this node stores the corresponding state information.

In contrast to the traditional approach a stateless GTP proxy does not remember any transient state of any connection in the nodes, since the states are maintained externally in a database separated from the nodes of the proxy device. The proxy device comprises one or more nodes, which handle incoming and outgoing messages, which do not remember any state information, a database, and a load balancer that distributes the load between the nodes. The invention disaggregates and decouples GTP state handling by using an external database, for example key-value storage (KVS) in which connection states are stored and the addressing and retrieval of the connection states from the database is part of the connection handling. By retrieving connections states from the database, for example KVS, GTP connections can be handled in a stateless manner and scalable mobile core solutions can be built.

In view of the above, it is an object of the invention to provide a GTP proxy that is suitable for deployment in a cloud environment. Hereby, the invention is based on the realization that, in order to provide for such a suitability, a cloud-native GTP proxy needs to be capable of being provided stateless. Thus, the invention is based on the understanding that a GTP proxy suitable for could environments does not need to have to remember the states of the connections provided through the GTP proxy. It is therefore an object of the invention to provide a stateless GTP proxy.

This object is solved by a proxy device for a wireless communication system comprising a plurality of tunnelling nodes for providing a plurality of connections between an entry gate-way, for example a SSGN/SGW, and an exit gateway, for example a GGSN/PGW, at least one load balancing entity, and a memory configured to store a plurality of state information values for the plurality of connections, wherein the at least one load balancing entity is configured to receive a message from the entry gateway, and select a working tunnelling node from the plurality of tunnelling nodes, wherein the working tunnelling node is configured to, in response to being selected by the load balancing entity, communicate with the memory to obtain state information relating to a previous state from the memory, provide state information relating to the current state of the message from the entry gateway to the memory for storing said state information relating to the current state, and establish a connection to the exit gateway.

The proxy device may comprise several sub-systems. A subsystem, can be hardware or software located at different or the same location and executing different or the same functions. The proxy device comprises one or more load balancers and one or more nodes.

The nodes of the proxy device are handling the incoming traffic or messages. The load balancer receives messages or data or packets from one gateway and forward the messages, data, or packet(s) to a node. The load balancer selects the node to which the messages, data, or packets are forwarded, wherein an algorithm may be used for performing the selection. The load balancer may forward the messages, data, or packets based on a load criterion. The load criterion may be based on the load of the nodes. The load balancer may use an algorithm to select the node. The algorithm may be a round robin algorithm or any other suitable algorithm. A node may be an entity that performs tasks in accordance with the GPRS tunnelling protocol. The tasks may be in accordance with GTPv1 and GTP v2. The node may - depending on the tunnel direction - represent the role of a standard SGNS/SGW or GGSN/PGW conformant to the 3G/4G/5G telecom standards. The node may terminate a GTP tunnel connection. The node may establish a GTP tunnel connection. The GTP proxy further may comprise a memory. The memory may be a database, for example a key-value storage. The proxy device terminates a first tunnel connection from a first gateway, for example an entry gate-way, or SSGN/SGW. The proxy device establishes a second tunnel connection with a second gateway, for example exit gateway. The entry gateway may be an SSGN/SGW. The exit gateway may be a GGSN/PGW. The proxy device associates the first tunnel connection with the second tunnel connection. The tunnel connections may be associated by storing the state information of the first tunnel connection and the second tunnel connection together. The state information may be stored in the memory. The state information of a tunnel connection may contain the IP-addresses, tunnel end-point identifiers (TEID), optionally a sequence number (SEQ), and timestamps. For example, the state information of a first tunnel connection may contain the IP address of the entry gateway, the TEIDs of the entry gateway for the first connection, optionally a sequence number, the IP address of the loadbalancer of the proxy device tasked with forwarding the messages, data, or packets from the entry gateway and the TEIDs and SEQ of the proxy device associated with the first connection. There may be separated IP addresses, and TEIDs, for the control and user plane. Each GTP-c node of the proxy device may in response to being selected by a load balancer query the memory to retrieve state information of a previous state. The load balancer routes incoming messages to the selected node by using an internal IP address. The selected node queries the memory in response to receiving a message from a load balancer. In other words, the node may be selected by forwarding a message to the selected node. The querying may be based on an International Mobile Subscriber Identity (IMSI) or TEID received within data, message, or packet received from the load balancer.

In case state information is retrieved based on IMSI or TEID, the node acts as end and start point for the respective first and second tunnel connection based on the retrieved state information which contain the state information of the first and second tunnel connection. The message, data, or packets is, therefore, received at the proxy device via one of the two tunnel connections associated with the state information associated with a state and forwarded by the other of the two tunnel connections associated with the state information. Subsequently, the node stores the state information of the state comprising the state information of the first tunnel connection and the second tunnel connection in the memory. Any subsequent messages received from one of the gateways or forwarded by a loadbalancer, may be forwarded to a different GTP-c node which may query the memory and retrieve the state information relating to the previous state from the memory. Therefore, the each node may be capable of receiving and sending messages associated with the first and second tunnel connection by retrieving the state information of a previous state from the memory based on an IMSI or TEID associated with said previous state.

The state information of a second tunnel connection may contain the IP address of the exit gateway, the TEIDs of the exit gateway for the second connection, the TEIDs of the proxy device associated with the second tunnel connection, optionally a sequence number (SEQ) for request and response messages respectively, the IP address of the loadbalancer of the proxy device tasked with forwarding the messages, data, or packets from the exit gateway. There may be separated IP addresses, and TEIDs, for the control and user plane.

The state information of the first tunnel connection and the state information of the second tunnel connection are stored as state information of a previous state. For example, the previous state corresponds to the first and second tunnel connection associated via the proxying device. Therefore, the state information may contain not only the information on the first and second tunnel connection, but also information that these connections are associated to forward messages via the proxy device. The state information of the previous state may be stored by the memory.

In one embodiment the invention relates to a proxy device for a wireless communication system wherein the proxy device comprises a plurality of nodes for providing a plurality of connections between an first gateway and a second gateway; a first load balancer handling incoming traffic from the first gateway, a second load balancer handling incoming traffic from the second gateway, a database configured to store a plurality of state information for a plurality of connections; wherein the memory stores state information on pairs of connections between the proxy device and the first gateway and between the proxy device and the second gateway, wherein state information on a pair of connections comprises information on a first connection between the proxy device and the first gateway is using or containing first tunnel end point identifiers of the first gateway and second tunnel end point identifiers of the proxy device and information on a second connection between the proxy device and the second gateway is using or containing third tunnel end point identifiers of the second gateway and fourth tunnel end point identifiers of the proxy device, wherein the first load balancer is configured to receive a first message from the first gateway, wherein the first message carries one of the second tunnel end point identifiers of the proxy device as header TEID and optionally the first tunnel end point identifiers of the first gateway as origin tunnel end point identifiers, wherein the first load balancer is further configured to select one of the nodes of the plurality of nodes, and to forward the message to the selected node, wherein the selected node is configured to communicate with the database and to request state information associated with the header TEID of the first message, wherein the selected node is further configured to replace the header TEID of the first message with one of the third tunnel end point identifiers of the second gateway and optionally to replace the origin TEIDs of the first message with the fourth tunnel end point identifiers of the proxy device, wherein the selected node subsequently forwards the first message with replaced TEIDs to the second gateway, wherein the second load balancer is configured to receive a second message from the second gateway, wherein the second message carries one of the fourth tunnel end point identifiers of the proxy device as header tunnel identifier and optionally the third tunnel identifiers of the second gateway as origin tunnel end point identifiers, wherein the second load balancer is further configured to select one of the nodes of the plurality of nodes, and to forward the second message to the selected node, wherein the selected node is configured to communicate with the database and to request the state information associated with the header TEID of the second message, wherein the selected node is further configured to replace the header TEID of the second message with one of the first tunnel end point identifiers of the first gateway and optionally to replace the origin TEID of the second message with the second tunnel end point identifiers of the proxy device, wherein the selected node subsequently forwards the second message with the replaced TEIDs to the first gateway.

In a preferred embodiment the proxy device further uses General Packet Radio Services (GPRS) Tunneling Protocol (GTP). Preferably, the proxy device processes messages in accordance with GTP version 1 and/or version 2. Therefore, the messages processed by the proxy device can be processed by GTP compatible entities as specified by the GPRS and GTP standards.

In a preferred embodiment, the plurality of nodes is configured to provide a plurality of connections between the first gateway and the second gateway. Thus, a plurality of GTP tunnel connections can be established between the first gateway and each node and between each node and the second gateway.

In a more preferred embodiment the first message and the second message are GTP control messages and the connections are GTP tunnel connections. For example, the messages may be create PDP context/session request and create PDP context/session response messages. In another example, the messages may carry the TEID for the control plane of the respective destination device as header TEID.

In a preferred embodiment the header is the GTP header, in particular the header following the UDP/TCP header.

In another preferred embodiment, the message from the first gateway further comprises a subscriber identifier for identifying the device for which the connection is established, wherein the node is further configured to provide the subscriber identifier and the TEID for the connection to the memory for storage, whereby the subscriber identifier and TEID for the connection are stored in association with one another and with the established connection. The subscriber identifier may be an IMSI.

In a preferred embodiment the node is further configured to mask the tunnel connection identifier and/or the device identifier prior to providing it to the memory for storage.

In another preferred embodiment the at least one load balancer is configured to select the node from the plurality of tunnelling nodes by selecting the node from the plurality of tunnelling nodes based on a load criterion.

In another preferred embodiment the at least one load balancer is configured to select the node from the plurality of tunnelling nodes by selecting the node from the plurality of tunnelling nodes in a round-robin fashion.

In another preferred embodiment the at least one load balancer is configured to select the node from the plurality of tunnelling nodes based on an appropriate selection mechanism or selection criterion. The skilled person is well aware of the different well-known selection criterions, for example, round-robin, randomized, or pseudo randomized. The invention can be carried out with any known or to be developed selection criterion or selection mechanism.

In another preferred embodiment, the tunnel end point identifiers are tunnel end point identifiers in accordance with the GTP protocol, in particular with the GTP protocol version 1 and version 2.

In another preferred embodiment, the memory uses key-value storage.

In a preferred embodiment the invention relates to a method for providing a connection between a first gateway and a second gateway using a proxy device in a wireless communication system, the method comprising the steps of
- storing, by a memory, state information on pairs of connections between the proxy device and a first gateway and between the proxy device and a second gateway, wherein state information on a pair of connections comprises information on a first connection between the proxy device and the first gateway using first tunnel end point identifiers, TEIDs, of the first gateway and second tunnel end point identifiers of the proxy device and information on a second connection between the proxy device and the second gateway using third tunnel end point identifiers of the second gateway and fourth tunnel end point identifiers of the proxy device,
- receiving, by a first load balancer, a first message from the first gateway, wherein the first message carries one of the second tunnel end point identifiers of the proxy device as header tunnel identifier and optionally the first tunnel end point identifiers of the first gate-way as origin tunnel end point identifiers,
- selecting, by the first load balancer, one of the nodes of the plurality of nodes,
- forwarding, by the load balancer, the message to the selected node,
- communicate, by the selected node, with the database and to request the state information associated with the header TEID of the first message,
- replace, by the selected node, the header TEID of the first message with one of the third tunnel end point identifiers of the second gateway and optionally to replace the origin TEID of the first message with the fourth tunnel end point identifiers of the proxy device, wherein the selected node subsequently forwards the first message with the replaced TEIDs to the second gateway,
- receive, by a second load balancer, a second message from the second gateway, wherein the second message carries one of the fourth tunnel end point identifiers of the proxy device as header tunnel identifier and optionally the third tunnel identifier of the second gateway as origin tunnel end point identifiers,
- select, by the second load balancer, one of the nodes of the plurality of nodes,
- forward, by the second load balancer, the second message to the selected node,
- communicate, by the selected node, with a memory and to request the state information associated with the header TEID of the second message,
- replace, by the selected node, the header TEID of the second message with one of the first tunnel end point identifiers of the first gateway and optionally to replace the origin TEID of the second message with the second tunnel end point identifiers of the proxy device, wherein the selected node subsequently forwards the second message to the first gateway with the replaced TEIDs.

In a preferred embodiment when the system handles GTP-c messages the first message carries the TEID for the control plane of the second tunnel end point identifiers as header TEID. The selected node replaces the header TEID of the first message with the TEID of the control plane of the third tunnel end point identifiers. The second message carries the TEID for the control plane of the fourth tunnel end point identifiers as header TEID. The selected node replaces the header TEID of the second message with the TEID of the control plane of the first tunnel end point identifiers.

In another preferred embodiment when the system handles GTP-c messages and the first message is a create PDP context/session request message the first message carries a header TEID that is zero, namely 0x000000000. In particular, since the TEID for the control plane for the GTP proxy is not created at this time.

In a preferred embodiment the method further includes that the step of selecting the node from the plurality of tunnelling nodes comprises selecting the node from the plurality of tunnelling nodes in a round-robin fashion or based on a load criterion.

In a preferred embodiment, the memory is a key-value storage and the step of communicating with the key value storage includes using the IMSI as key.

Another preferred embodiment relates to a computer program product comprising instructions which, when executed by a processor, cause the processor to perform the above specified method steps.

### Description of the drawings:

Fig. 1 shows a schematic example of the invention
Fig. 2 shows a call flow of a create request
Fig. 3 shows call flow of a GTP message handled by the proxy device.
Fig. 4 shows the system with respect to a generic GTP message.
Fig. 5 shows an example of a proxy device connecting a first gateway and a second gate-way.

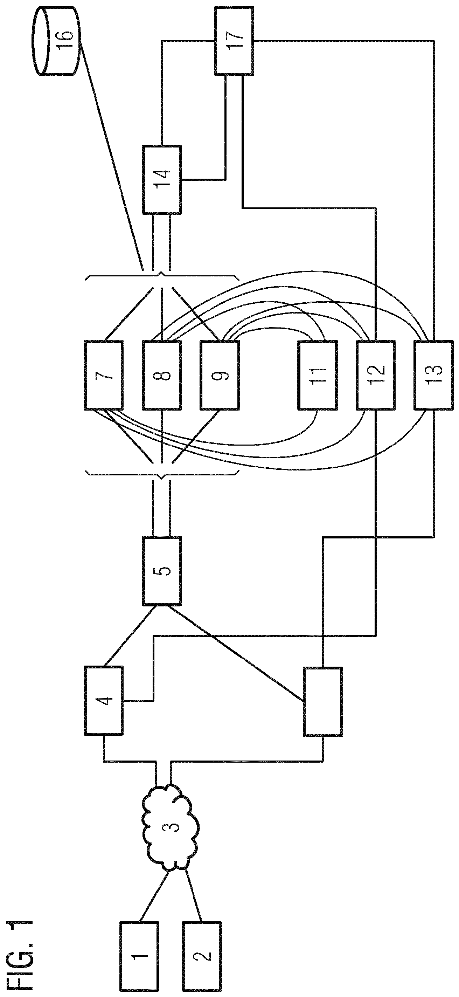

Fig. 1 shows a schematic example for a setup including the invention. Two user devices 1, 2, are attached via a radio access network (RAN) 3, which provides the connection between the user device and a core network. There may be one or more SGSN or SGW 4. The SGSN/SGW forwards messages and data from the user device to a load balancer 5 of a proxy device. The load balancer 5 handles GTP-c messages from the SSGN(s)/SGW(s). There may be more than one load balancer, in particular, one load balancer 5 for the control plane and optionally one load balancer 10 for the user plane. There may also be only one load balancer that provides load balancing for every message. The proxy device further comprises one or more nodes 7, 8, 9, 11, 12, 13. The proxy device may comprise dedicated nodes for the control plane 7, 8, 9, and dedicated nodes for the user plane 11, 12, 13. The proxy device further comprises one or more load balancers 14, which handle data, messages and packets from a GGSN(s)/PGW 17. There may be one load balancer for the control plane 14 and one load balancer for the user plane. Alternatively, there may be one load balancer for all traffic. The proxy device comprises a database 16. The database may be a key-value storage. The databased may be a fast access database.

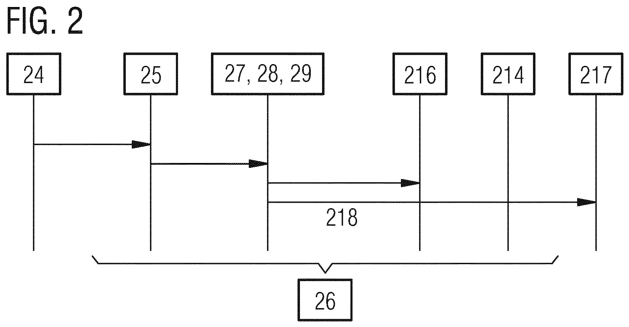

Fig. 2 shows one side of the call flow of a create PDP context/session request message send from a first gateway SGSN/SGW 24 to the proxy device. The message may be a create PDP context request message or create session request message as specified by 3GPP for the different versions of the GTP protocol. The message carries at least the IP-address of the destination device, which is the load balancer 25 of the proxy device. The message also carries as origin IP address, i.e. the IP address of the first gateway. The message may carry distinct IP addresses for the control and the user plane of the first gateway. In accordance with the IP address the message is routed to the load balancer 25.

The load balancer 25 selects one of the nodes 27, 28, 29 of the proxy device. The load balancer 25 may choose the node based on a load criterion. The load criterion may be based on a round robin method, a priority queue, a weight associated with each node 27, 28, 29, or any other appropriate load criterion. A node 27, 28, 29 can be a node capable of handling GTP-c traffic or messages. The load balancer 25 forwards the message to the selected node. The message, which may be a GTP message, contains the GTP tunnel endpoint Identifiers (TEIDs) of the first gateway (SSGN/SGW) and a header TEID having a value of zero. The load balancer may forward the message in accordance with private IP-addresses.

In particular, the message contains the GTP-c header as, for example, specified in 3GPP TS 26.060 section 8.2 or the GTPv2-header as specified in 3GPP TS.26.274 section 5.5. The create PDP context/session request message contains a header TEID having a value of zero, an IMSI which may be associated with the user device connected to the first gateway (GW) and requesting to create a PDP context/session, an APN, the first gateway's TEIDs for the control and the user plane (TEID-c and TEID-u), the TEID-c and TEID-u may be related to the particular context/session, and the IP addresses for the control and user plane of the first gateway 24 as origin IP addresses. Further, the header optionally contains a sequence number SEQ for the context/session. The SEQ is present when a response message is expected. For example, in case of a session request message a create session response message is expected. The response can be associated with the request via said sequence number. TEID-c and TEID-u define the tunnel end points at the first gateway 24 for the respective control and user plane. These TEIDs identify the Tunnel end-point for any subsequent message, e.g. the header TEID of a subsequent message is set to one of these TEIDs. For example, in case of a create session response the header TEID is set to the TEID-c. The GTP message may further contain an IMSI and an APN. The IMSI may belong to the user device connected to the origin gateway. The APN may be selected by the user device or by rules or policies of the access network. The APN is resolved in the access network by querying a DNS request and the response is the GTP-c IP address belonging to the GTP-c load balancer 25. Accordingly, messages carrying the resolved APN are routed to the load balancer. Further, the message may contain a sequence number. The sequence number is used as a transaction identity for signalling messages having a response message defined for a request message that is the Sequence Number value is copied from the request to the response message header. Thus, allowing to associate the response with the request and vice versa.

Subsequent to the load balancer forwarding a message to a selected node, the proxy device, in particular and for example the selected GTP-c node to which the message is forwarded, generates four new TEIDs. The first two TEIDs are the TEIDs of the proxy device for the connection between the first gateway and the nodes of the proxy device (control and user plane). The second two TEIDs are new TEIDs of the proxy device for a second connection between the nodes of the proxy device and a second gateway. The proxy device also generates a new sequence number SEQ. The generated TEIDs are unique in the system. The generation may be based on a random number. The generation may be based on a current time. The SEQ may also be generated based on a random number. The generated TEIDS are at least unique as long as the connection exists. That is TEIDs can be reused only after the session/context is deleted.

The proxy device masks the TEID-c and TEID-u of the message by replacing these information elements with the generated TEIDs for the second connection to the second gate-way.

The header TEID value remains zero. In addition, the field carrying the IP addresses for the control and user plane of the first gateway 4, 24 may be replaced by the load balancer 5, 25 carrying the IP address for the control plane of the load balancer 14, 214) and the IP address for the user plane of the GTP-u node 11, 12, 13 (shown in fig. 1), which handle messages from a second gateway 217. For example, a GGSN/PGW. In this way the proxy device spoofs the origin IP address(es) of the first gateway 24 included in the forwarded message. The second gateway 217 to which the message is forwarded identifies the load balancer 214 and the GTP-u node 11, 12, 13, which IP address(es) are contained in the message, as origin of the message. Thus, the second gateway 217 receives a message containing the generated pair of TEID specifying tunnel end points for the second connection at the proxy device 26 and the IP addresses of the load balancer 214 and the GTP-u node 11, 12, 13 handling messages from the second gateway. Therefore, the second gate-way can send messages back to the load balancer 214 and the GTP-u node 11, 12, 13 of the proxy device.

The sequence number SEQ of the create PDP context request/create session request message may be replaced by the sequence number generated by the proxy device.

The proxy device, for example by means of the node 27, determines the IP address of a second gateway 217. The determination may be based on the access point name (APN). Matching an APN to a pair of APN and IP address determines the IP address (APN mapping of the IP address of the serving gateway). The APN may be contained within the create PDP context request/create session request message. The proxy device, for example by means of a node, may retrieve the destination address from a map of stored APN and/or IP address values.

The proxy device, for example by means of the node 27, saves all states to the database 216. The database may be a key-value storage. The saving may include creating a database entry, for example a Redis¹ hash, using the header TEID, the original TEIDs for the control and user plane of the first gateway, the four generated TEIDs for the control and user plane for the first connection and the second connection, the first gateway IP addresses for the control and user plane, the proxies IP addresses for the control and user plane, i.e. the GTP-C IP addresses of the load balancers 214 and 25 and the GTP-U IP address of the GTP-u node 11 ,12, 13, the original and masked sequence number and the destination IP addresses, and the header TEID and/or IMSI as key. Alternatively, the state information may be stored in a JavaScript Object Notation or as an array of values (unlike a hash that additionally contains field names), or as binary encoded in base64 string, etc.
¹ https://de.wikipedia.org/wiki/Redis

The proxy device 26 then forwards 218 the modified/masked create PDP context/session request/create session request message to the second gateway. The modified masked message contains the TEID header having a value of zero and the generated TEIDs of the proxy device for the control and user plane of the second connection, and the IP address for the control plane of the of the load balancer 214 and the IP address for the user plane of the GTP-u node 11, 12, 13 as origin IP addresses.

The message forwarded by the proxy device 26, therefore, carries the masked TEID values, masked sequence number, the IP address of the load balancer 214 and the IP address of the GTP-u node 11, 12, 13 as origin IP address. Therefore, for the second gateway 217 the message appears to be originating from the proxy device, preferable from, the load balancer 214 and the GTP-u node 11, 12, 13 handling the incoming messages from the second gateway 217, without any indication that the message originally originated from the first gateway. Thus, the forwarded GTP-c message may be sent from the node and may bypass the load balancer 214, however, from an external viewpoint the GTP-c message appears to be originating from the load balancer 214. Storing the session information including original values and masked values in such a way that the new values are associated with the original information of the message received from the first gateway 24, however, allows to associate subsequent messages with the particular session to forward them to the correct gateway. This association allows for bi-directional communication.

For example, the first message may contain the origin IP address 1.2.3.4 and destination IP address 4.3.2.1, which is the IP address of the load balancer 25, and for example a TEID-c 12, TEID-u 34 and SEQ 1, and header TEID 0. In case of GTPv2 these values are included in the F-TEID. The message is sent from the first gateway 24 to the load balancer 25 addressed with the destination IP address of the load balancer 25, the load balancer 25 forwards the message to a selected node 27 of the proxy device 26. The proxy device 26 generates four new TEIDS, 21, 43, 56, 78, TEID-c 21 and TEID-u 43 belonging to the proxy device for the first connection and TEID-c 56 and TEID-u 78 for the connection to the second gateway. These four TEIDs are belonging to the proxy device 26 and specify the end points at the proxy device 26 for the connection between the first gateway 24 and the proxy device and the connection between the proxy device 26 and the second gateway 217. Therefore, the proxy device 26 terminates the first connection and established a second connection by providing the respective tunnel end points. The proxy device 26 also generates a new SEQ 2. The proxy replaces the SEQ and the TEID-c and TEID-u received from the first gateway 24 with the new values 2, 56, and 78. Further, the origin IP address of the first gateway 24 is replaced with IP address of the load balancer 214, which may be 5.6.7.8 and the destination IP address (which was the IP address of the load balancer 25) received from the first gateway is replaced with the IP address of the second gateway 8.7.6.5, the IP address of the second gateway 217 may be received from internal APN and/or IP address mapping. The proxy device 26 stores the state information related to the pair of connections in the database 216. The storing/saving may be done by using a key-value-storage. In particular, the proxy device may create a hash using the IMSI as key.

Subsequently, the message is forwarded to the second gateway 217, which now knows the generated TEID-c 56 and TEID-u 78 of the proxy device 26 and the generated sequence number 2.

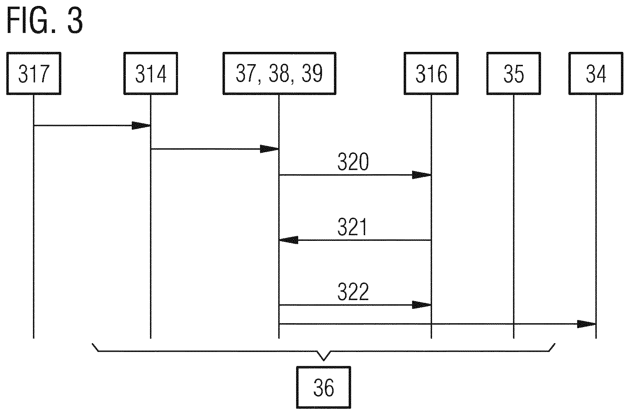

The response of the second gateway is also shown in fig. 3.

The second gateway 217 in response may send a create PDP context/create session response message, which corresponds to a message send from the right hand side in fig. 2, by setting the header TEID to 56, which is the control plane tunnel end point at the proxy device 26, and replacing the TEID-c and TEID-u with its own TEIDs for this connection, for example 65 and 87. The second gateway 217 sets the destination IP address to 5.6.7.8 (which is the address of the load balancer 214) and the origin IP address to its own, e.g. 8.7.6.5. The message accordingly is sent to the load balancer 214 of the proxy device 26. The load balancer 214 selects a node based on a load criterion. Based on the TEID the node retrieves the state information from the key-value-storage 216. The selected node, which is one of the nodes 27, 28, 29, subsequently has all state information, in particular, the association of the first connection with the second connection. Further, one of the nodes 27, 28, 29 retrieves the TEID-c 56 and TEID-u 78 for the second connection and acts as end point for the message carrying the header TEID 56, which equals the TEID-c of the response message. The node 27, 28, 29 replaces the TEID-c/u with the TEID-c/u generated for the first connection, i.e. 21 and 43, further, the header TEID is replaced with the associated end point of the first connection, i.e. 12 which is the control plane TEID of the first gateway 24 of the first connection. Furthermore, the origin IP address is replaced by the IP address of the load balancer 25, i.e. 4.3.2.1 and the destination IP address is replaced with the address of the first gateway 24, i.e. 1.2.3.4. Also the sequence number SEQ is replace with its initial value 1. The first gateway 24 receives the message containing the TEID-c and TEID-u of the proxy device 26 for the first connection, 21 and 43 and the SEQ number 1, which signals that this message is the response to the request carrying the same SEQ.

Fig. 3 shows the call flow of the create response message from a gateway (GW) 317. The GW 317 may be a GGSN/PGW. The create PDP context response/create session response message is sent in response to the create PDP context request/create session request message as described with respect to fig. 2.

The create response message may be a create PDP session/ context response message. The create response has a header TEID. The header TEID is the TEID-c transmitted by the create session/PDP context request message. The TEID-c may be generated by the proxy device 36. The generation may be performed by any of the GTP nodes 37, 38, 39 of the proxy device 36. For example, the TEID-c is generated by the proxy device, for example, by the selected GTP node of the proxy device 36. The create PDP context response/create session response message further contains TEIDs for the control and user plane of the second gateway 317 that sends the message.

The create response message is forwarded by a gateway 317 to a load balancer 314. The load balancer 314 selects a GTP node 37, 38, 39. The selection may be based on a load criterion as described with respect to fig. 2.

The load balancer 314 forwards 319 the create response message to the selected GTP node 37. The selected GTP node 37 queries 320 the database 316 for a previous session. In particular, the database is queried for the hash using the header TEID and/or IMSI, and then the TEID and/or IMSI hash associated with a previous session is retrieved 321. The GTP node may identify the hash of the previous session by using the header TEID. The TEID-c created for the second connection may be associated with the IMSI. Therefore, the node can retrieve the IMSI based on the header TEID carrying the TEID-c of the proxy device for the second connection. The IMSI may be used as key for the IMSI hash created when saving the session/context state information relating to the state. The GTP node masks and unmasks the TEID in the following way. By using the header TEID, which is set to the TEID-c of the second connection at the load balancer, the IMSI may be retrieved and the IMSI is used as key to retrieve the session state information, the GTP node 37 then retrieves the TEID for the control and user plane of the first gateway34 which has sent the create PDP context/create session request message, for example the SGSN of fig. 2 and the corresponding IP addresses. The GTP node identifies the response request message as a response to the create request based on the sequence number.

For example, the GTP node masks the header TEID of the response message by replacing the header TEID with the TEID-c of the first gateway 314, as explained with respect to fig.2, this TEID is then stored in the database 316 by means of the hash or the like. The TEIDs may also be stored in an array. The TEIDs may be stored together with the remaining, necessary state information. The GTP node may also replace the TEIDs for the control plane with the generated TEID of the proxy device 36 for the first connection retrieved from the hash. The GTP-node 37 may also replace the origin IP addresses of the control plane by the IP addresses for the control plane of the load balancer 35 of proxy device 36. The GTP node 37 also replaces the SEQ number with the stored SEQ which belongs to the first connection between first gateway and proxy device. Likewise the destination IP addresses are replaced with the IP addresses of the first gateway 34. Further, the GTP-node 37 restores the original SEQ, which was sent from the first gateway 34, in the header by replacing the generated sequence number of the second connection with the original sequence number of the first connection. All state information is stored 322 in the database 316. The state information may be stored using a key-value pair, e.g. Redis hash, using the IMSI as key

In one embodiment after receiving the create session/PDP context request message by the proxy device, as for example discussed with respect to fig. 2, only two TEIDs (TEID-c and TEID-u) for the second connection are generated in the proxy device and stored in the hash. These TEIDs correspond to the end points of the proxy device for the second connection, that is the connection between the proxy device and the second gateway. The generated TEIDs for the second connection and the TEIDs of the first gateway are then stored in the database. However, the hash does not yet contain the generated TEIDs of the proxy device for the first connection (the connection between the first gateway and the proxy device). Since the response message has not yet being sent there is no need to create the TEIDs for the first tunnel connection at this point. The create session request message is forwarded to the second gateway as described with respect to fig. 2. The create response message is modified and sent to the proxy device as described above. However, upon receipt of the session response message the node of the proxy device generates the missing TEIDs of the proxy device for the first connection and mask the TEIDs for the user plane and control plane with these generated TEIDs when forwarding the message to the first gateway. Thus, from the viewpoint of the first gateway the session response message originates from the proxy devices as it carries the newly generated TEIDs. Subsequently, all state information including the two pairs of generated TEIDs for the first connection and the second connection are stored to the database.

The create response message modified by the GTP node is forwarded to the first gateway of the create request message.

In summary: The create request and response process start with sending a message from a first gateway. The message contains a header TEID of value zero and the TEIDs and IP addresses of the first gateway and a sequence number. The TEIDs and IP addresses for control and/or user plane are masked by replacing them with one pair of two pairs of newly generated TEIDs and the IP addresses of a load balancer and GTP-u node of the proxy device. In the proxy device the TEIDs and IP addresses of the first gateway are stored to a database together with the newly generated TEIDs for the control and user plane. Therefore, after forwarding this request message by the proxy device, the second gateway, which can by identified by the APN, knows the IP addresses of the load balancer and GTP-u node of proxy device, which is responsible for handling messages from the second gateway, and the generated TEIDs of the proxy device. Respectively, the second gateway has no knowledge related to the IP-addresses or TEIDs of the first gateway. The proxy device has saved all state information as a hash associated with the IMSI. The proxy device stores the hash in a database. Thus, the GTP-c-node may not have any state information after forwarding the message.

The database 16 of fig.1 may be a key-value-storage (KVS). A KVS is a data storage paradigm designed for storing, retrieving, and managing associative arrays, and a data structure more commonly known today as a dictionary or hash table. Dictionaries contain a collection of objects, or records, which in turn have many different fields within them, each containing data. These records are stored and retrieved using a key that uniquely identifies the record, and is used to find the data within the database."² In essence an array of data fields is associated and stored or retrieved by identifying it based on a key. In one embodiment the IMSI of a GTP create message will act as a primary key for the lifetime of context/session.
² https://en.wikipedia.org/wiki/Key%E2%80%93value_database

The database 16 may store session information. The session information may relate to a previous session associated with an IMSI or APN or TEID. The GTP node may create an hash or IMSI hash based on the IMSI and the TEIDs of the message. The IMSI hash can unambiguously identify a session. The IMSI hash may be a key-value pair for KVS (e.g. Redis³ DB, DynamoDB or others). For example, the key is the IMSI number itself, the value is an array containing the session specific information, e.g. the TEIDs, generated TEIDS, SEQ, generated SEQ, IMSI, APN.
³ https://de.wikipedia.org/wiki/Redis

In one embodiment the session information may be stored in a Redis hash as value. The Redis Hash value is a sequence of string pairs, where the first string is member name, the second string is a member value, e.g. key "IMSI_123456789012345" with value "IMSI 123456789012345 APN some.apn.com Activated 1" and will be parsed into a structure equal to session = Session { IMSI: "123456789012345", APN: "some.apn.com", Activated: true,} The value structure contains all GTP message related information, like all TEIDs (newly generated, original; C-plane, U-plane; for the SGSN/GGSN/SGW/PGW), used APN, GTP-U node and tunnel information, GGSN/SGSN/SGW/PGW IP addresses and origin ports and addresses, timestamps, etc. The Create message associates the IMSI key with such a value structure, as well as TEIDs as keys with IMSI as value. The hash can be retrieved or queried by reading the header TEID and determining the IMSI. Subsequently, using the IMSI as key the TEID values can be retrieved. In short, the session information can be retrieved using information included in the messages header and contains all relevant session information.

The hash can be retrieved using one of the TEIDs, which allows to retrieve the IMSI for the session from the hash. The hash can be retrieved using the IMSI to retrieve the generated TEIDs. Other combinations of key-value are possible to allow the retrieval of session information.

For example, in case there is a GTP message, and generated TEIDs. The IMSI from a GTP create message will act as a primary key for life of context/session. Generated TEIDs were generated during Create Request handling and are used to avoid TEID collision. These TEIDs will replace TEID-C and TEID-U information elements in GTP message. All follow-up messages will use these TEIDs in GTP header.

For example, the IMSI in Create request is "12345" and the proxy device has generated two TEID-C: 0x123 and 0x456 (also 2 more TEID-U could be generated). During generation of the TEIDs they are associated with the given IMSI and saved as key-value pair. TEID as a key, IMSI as a value: "SET TEID_0x123 12345" "SET TEID_0x456 12345"

Then all information is stored into GTP struct: IMSI, original TEIDs, generated TEIDs, IP addresses, SEQ, timestamps, and all other relevant information. GTP struct may be translated into Redis hash format - pairs of "member value":

```
 {
 Activated: true,
 IMSI: 12345,
 APN: some.apn.com
 ...
 } -> "Activated 1 IMSI 12345 APN some.apn.com ..."
```

This hash is saved into the database, for example a Redis database, as a key-value pair. IMSI as a key, hash as a value: "HSET IMSI_12345 Activated 1 IMSI 12345 APN some.apn.com ..."

On all follow-up messages the GTP headers will have one of generated TEID-c as header TEID-c. Using this TEID context/session information can be retrieved.
"GET TEID_0x123" - returns IMSI value 12345
"HGETALL IMSI_12345" - returns entire hash

Then the hash can be scanned into GTP struct to work with.

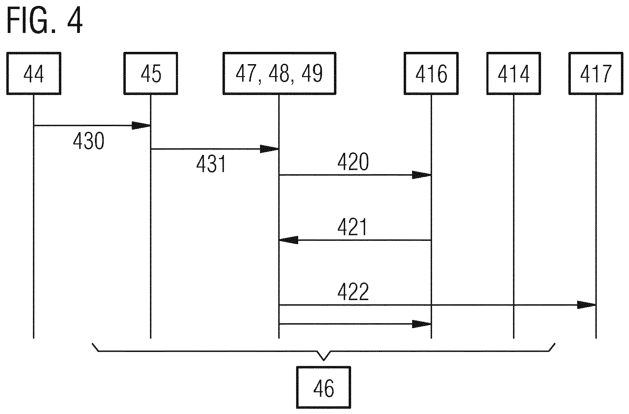

Fig. 4 shows the invention with respect to a GTP message, e.g. a generic or subsequent GTP message. Previously, the connection via the proxy device using two GTP tunnel connections connecting the proxy device to each of the two gateways has been established. The establishment of the tunnel connections may include the exchange of create session request and create session response messages as explained above. The proxy device has stored the state information of a previous state in the memory 416, i.e. the state information relating to a first tunnel connection and a second tunnel connection. The first tunnel connection is associated with a GTP tunnel between a first gateway and the proxy device and the second tunnel connection is a GTP tunnel between the proxy device and a second gateway. The state information comprises the IP addresses, TEIDs, and optionally sequence numbers, as well as timestamps, APN, IMSI for the respective GTP tunnel connections. For example, the state information comprises 4 TEIDs for the control plane, wherein two TEIDs are associated with the first tunnel connection and the remaining two TEIDs are associated with the second tunnel connection. There may also be four TEIDs for the user plane. Overall the state information may comprise be eight TEIDs, two pairs of TEIDs for the control and user-plane for each tunnel connection. The state information also comprises the IP addresses of the respective entities receiving and sending messages via the established tunnel connection. The IP addresses are used to route the messages to the respective entities. For example, in case of control and user plane separation (CUPS) there may the different IP addresses assigned to the entities for the control and user plane.

Fig. 4 shows a subsequent GTP message sent 430 from a first gateway 44 to a proxy device 46. The message is received by the loadbalancer 45 of the proxy device. The load balancer selects a node 47, 48, 49 of the proxy device. The loadbalancer 45 forwards 431 the message to the selected node 47. The message carries as header TEID, the TEID of the proxy device of the first connection. The header TEID may for example be a control plane TEID, e.g. in case the message is a control message. The message may optionally further contain the TEID(s) of the first gateway 44 associated with the first tunnel connection. The node 47 queries 420 the database 416 for state information related to a previous state. The querying may be based on the header TEID. In case the database stores the state information related to a previous state associated with the header TEID, the state information is retrieved 421 by the node 47. The node associates the message with the first tunnel connection based on the retrieved state information related to a previous state. The association of the message with the previous state may be based on matching the TEID, i.e. the header TEID, and/or the optional TEIDs of the first gateway 44, with the TEID(s) associated with the first tunnel connection stored in the state information of the previous state. The node subsequently forwards 422 the message via the second tunnel connection stored within the state information related to the previous state. To forward the message via the second GTP tunnel connection, the information fields relating to the header TEID and optionally the origin TEID for the control and user plane, as well as the origin and destination IP addresses are replaced by the corresponding values of the second tunnel connection comprised by the state information related to the previous state, i.e. the tunnel end point identifier of the second gateway 417 and the TEIDs for the control and user plane of the proxy device associated with the second tunnel connection. After the replacement of the header TEID and optionally the TEIDs for the control and user plane as well as the IP addresses of the origin and destination entity, these information fields of the message are masked, i.e. from the perspective of the second gateway 417 the message appears to originate from the proxy device 46. Accordingly, the message does not contain any information that could be linked to the first gateway 44. The retrieval of the state information related to a previous state by the node allows for handling the tunnel connection on a message by message basis instead of associating each tunnel with one particular device that stores the tunnel information. In this case of GTP tunnel handling on a message by message basis, each message can be handled by a different entity, e.g. node 47, 48, or 49 of the proxy device 46. After the node masks the relevant information fields, the node stores the state information including the IP addresses, TEIDs, of first and second tunnel connection in the memory. The state information may be stored using a key-value storage. The state information may be stored in a hash in the key-value storage. The header TEID may be used as key. An expected header TEID may be used as key. For example, one of the TEIDs of the first or second tunnel connection associated with the proxy device may be used as key. The reason being that any message belonging to one of these tunnel connections will have one of the TEIDs associated with the first and second tunnel connection identifying the end point at the proxy device as header TEID. Therefore, any generic GTP message carrying a TEID associated with a stored state information related to a previous state, can be handled by any of the nodes of the proxy device, since the nodes retrieve the state information using the header TEID on a message by message basis. Subsequent, to each forwarded message the node updates the memory by storing the information relating to the current state in the memory. Thus, for a subsequent message this state information is the state information relating to a previous state. The sequence number SEQ may also be masked as explained above with respect to fig. 2 and fig. 3. That is a SEQ present in the message header is stored with the state information for the first or incoming tunnel connection and replaced with a generated SEQ for the second or outgoing tunnel connection.

As shown above, contrary to the established GTP handling where each state is associated with two entities exchanging messages and storing the relevant state information by themselves, the retrieval from a memory based on specific information allows to retrieve state information on a message by message basis, likewise allowing different entities to handle messages associate with the same tunnel connection.

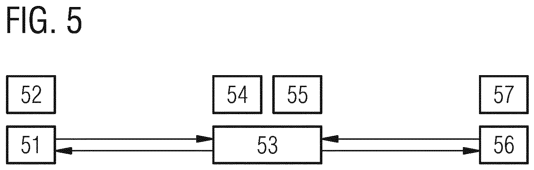

Fig. 5 shows the system after establishment of two GTP tunnel connections that connect the first gateway and the second gateway via a proxy device 53. A first gateway, which may be an SSGN, is connected with the proxy device via a first tunnel connection. The respective tunnel end point identifiers are first tunnel end point identifiers 52 of the first gateway 51 and second tunnel end point identifiers 54 of the proxy device 53. The tunnel end point identifiers may include the tunnel end point identifier for the control and user plane of the tunnel connection. There is a second GTP tunnel established between the proxy device 53 and a second gateway, which may be a GGSN. The respective tunnel end point identifiers defining the second tunnel connection are fourth tunnel endpoint identifiers 55 of the proxy device 53 and third tunnel end point identifiers 57 of the second gateway 56. A message sent from the first gateway carries the TEID of the control plane of the second tunnel end point identifiers 54 of the proxy device as header TEID and optionally the first tunnel end point identifiers 52 of the first gateway 51 as origin TEIDs. A message sent from the proxy device to the first gateway carries the TEID of the control plane of the first tunnel end point identifiers 52 as header TEID and optionally the second tunnel end point identifiers 54 of the proxy device 53 as origin TEIDs. A message sent from the proxy device 53 to the second gateway 56 carries the TEID of the control plane of the third tunnel end point identifiers 57 of the second gateway 56 as header TEID and optionally the fourth tunnel end point identifiers 55 of the proxy device 53 as origin TEIDs. A message sent from the second gateway 56 to the proxy device 53 carries the TEID of the control plane of the fourth tunnel end point identifiers 55 of the proxy device 53 as header TEID and optionally the third tunnel end point identifiers 57 of the second gateway 56 as origin TEIDs.

Further, any control message sent to the proxy device via one tunnel connection is handled by a load balancer and only the selected node to which the message is forwarded queries the database for the state information, namely the tunnel end point identifiers associated with the first and second tunnel connection. Subsequently the node replaces the header TEID of the message in accordance with the state information and forwards the message via the other tunnel connection.

## Claims

1. A proxy device for a wireless communication system, wherein the proxy device comprises:
a plurality of nodes (7, 8, 9) for providing a plurality of connections between a first gateway (4) and a second gateway (17);
a first load balancer configured to handle incoming traffic from the first gateway,
a second load balancer configured to handle incoming traffic from the second gateway,
a database (16) configured to store a plurality of state information for a plurality of connections;
wherein the database (16) is configured to store state information on pairs of connections between the proxy device and a first gateway and between the proxy device and a second gateway, wherein state information on a pair of connections comprises information on a first connection between the proxy device and the first gateway using first tunnel end point identifiers, TEIDs, of the first gateway and second tunnel end point identifiers, TEIDs, of the proxy device and information on a second connection between the proxy device and the second gateway using third tunnel end point identifiers, TEIDs, of the second gateway and fourth tunnel end point identifiers, TEIDs, of the proxy device,
wherein the first load balancer is configured to receive a first message from the first gate-way, wherein the first message carries one of the second tunnel end point identifiers of the proxy device as header tunnel end-point identifier,
wherein the first load balancer is further configured to select one of the nodes of the plurality of nodes, and to forward the message to the selected node,
wherein the selected node is configured to communicate with the database and to request the state information associated with the header TEID of the first message, wherein the selected node is further configured to replace a header TEID of the first message with one of the third tunnel end point identifiers of the second gateway, wherein the selected node is configured to subsequently forward the first message to the second gateway, wherein the second load balancer is configured to receive a second message from the second gate-way, wherein the second message carries one of the fourth tunnel end point identifiers of the proxy device as header tunnel end point identifier,
wherein the second load balancer is further configured to select one of the nodes of the plurality of nodes, forward the second message to the selected node, wherein the selected node is configured to communicate with the database and to request the state information associated with the header TEID of the second message, wherein the selected node is further configured to replace the header TEID of the second message with one of the first tunnel end point identifiers of the first gateway, wherein the selected node subsequently forwards the second message to the first gateway.

2. The proxy device according to claim 1, wherein the proxy device is using the General Packet Radio Services, GPRS, Tunneling Protocol, GTP.

3. The proxy device according to claim 1, wherein the plurality of nodes is configured to provide a plurality of connections between the first gateway and the second gateway.

4. The proxy device of any of the preceding claims, wherein the first message and the second message are GTP control messages and wherein the connections are GTP tunnel connections.

5. The proxy device of any of the preceding claims, wherein the header is the GTP header, in particular the header following the UDP or TCP header.

6. The proxy device of any of the preceding claims, wherein the first message from the first gateway further comprises a subscriber identifier for identifying the device for which the connection is established, wherein the selected node is further configured to provide the subscriber identifier and the TEID for the connection to the database for storage,
whereby the subscriber identifier and TEID for the connection are stored in association with one another and with the established connection.

7. The proxy device according to any of the preceding claims, wherein the selected node is further configured to mask the tunnel connection identifier and/or a device identifier prior to providing it to the database for storage.

8. The proxy device according to any of the preceding claims, wherein at least one load balancer is configured to select the node from the plurality of tunnelling nodes by selecting from the plurality of tunnelling nodes based on a load criterion

9. The proxy device according to any of the preceding claims, wherein the at least one load balancer is configured to select the node from the plurality of tunnelling nodes by selecting from the plurality of tunnelling nodes in a round-robin fashion.

10. The proxy device according to claim 9, wherein the tunnel end point identifiers are tunnel end point identifiers in accordance with the GTP protocol, in particular with the GTP protocol version 1 or version 2.

11. The proxy device according to any of the preceding claims, wherein the database comprises a Key Value Storage.

12. A method for providing a connection between a first gateway and a second gateway using a proxy device in a wireless communication system, the method comprising the steps of
- storing, by a database of the proxy device, state information on pairs of connections between the proxy device and a first gateway and between the proxy device and a second gateway, wherein state information on a pair of connections comprises information on a first connection between the proxy device and the first gateway using first tunnel end point identifiers, TEIDs, of the first gateway and second tunnel end point identifiers of the proxy device and information on a second connection between the proxy device and the second gateway using third tunnel end point identifiers of the second gateway and fourth tunnel end point identifiers of the proxy device,
- receiving, by a first load balancer of the proxy device, a first message from the first gateway, wherein the first message carries one of the second tunnel end point identifiers of the proxy device as header tunnel identifier and optionally the first tunnel end point identifiers of the first gate-way as origin tunnel end point identifiers,
- selecting, by the first load balancer, one of the nodes of a plurality of nodes of the proxy device,
- forwarding, by the load balancer, the message to the selected node,
- communicating, by the selected node, with the database and requesting the state information associated with the header TEID of the first message,
- replacing, by the selected node, the header TEID of the first message with one of the third tunnel end point identifiers of the second gateway and optionally replacing the origin TEID of the first message with the fourth tunnel end point identifiers of the proxy device, wherein the selected node subsequently forwards the first message with the replaced TEIDs to the second gateway,
- receiving, by a second load balancer of the proxy device, a second message from the second gateway, wherein the second message carries one of the fourth tunnel end point identifiers of the proxy device as header tunnel identifier and optionally the third tunnel identifiers of the second gateway as origin tunnel end point identifiers,
- selecting, by the second load balancer, one of the nodes of the plurality of nodes of the proxy device,
- forwarding, by the second load balancer, the second message to the selected node,
- communicating, by the selected node, with a memory and requesting the state information associated with the header TEID of the second message,
- replacing, by the selected node, the header TEID of the second message with one of the first tunnel end point identifiers of the first gateway and optionally replacing the origin TEID of the second message with the second tunnel end point identifiers of the proxy device, wherein the selected node subsequently forwards the second message to the first gateway.

13. The method according to any of the preceding claims, wherein the step of selecting selects the node from the plurality of tunnelling nodes by selecting from the plurality of tunnelling nodes in a round-robin fashion or based on a load criterion.

14. The method according to claim 12, wherein the database is a key-value storage and step of communicating with the key value storage includes using an International Mobile Subscriber Identity, IMSI, as key.

15. A computer program product comprising instructions which, when executed by a processor, cause the processor to perform the method according to any of claims 12 to 14.

## Patentansprüche

1. Proxy-Vorrichtung für ein drahtloses Kommunikationssystem, wobei die Proxy-Vorrichtung umfasst:
eine Vielzahl von Knoten (7, 8, 9) zum Bereitstellen einer Vielzahl von Verbindungen zwischen einem ersten Gateway (4) und einem zweiten Gateway (17);
einen ersten Lastverteiler, der so konfiguriert ist, dass er eingehenden Datenverkehr vom ersten Gateway verarbeitet,
einen zweiten Lastverteiler, der so konfiguriert ist, dass er eingehenden Datenverkehr vom zweiten Gateway verarbeitet,
eine Datenbank (16), die so konfiguriert ist, dass sie eine Vielzahl von Zustandsinformationen für eine Vielzahl von Verbindungen speichert;
wobei die Datenbank (16) so konfiguriert ist, dass sie Zustandsinformationen zu Verbindungspaaren zwischen der Proxy-Vorrichtung und einem ersten Gateway sowie zwischen der Proxy-Vorrichtung und einem zweiten Gateway speichert, wobei Zustandsinformationen zu einem Verbindungspaar Informationen umfassen zu
einer ersten Verbindung zwischen der Proxy-Vorrichtung und dem ersten Gateway unter Verwendung erster Tunnelendpunkt-Identifikatoren, TEIDs, des ersten Gateways und zweite Tunnelendpunkt-Identifikatoren, TEIDs, der Proxy-Vorrichtung sowie Informationen über eine zweite Verbindung zwischen der Proxy-Vorrichtung und dem zweiten Gateway unter Verwendung dritter Tunnelendpunkt-Identifikatoren, TEIDs, des zweiten Gateways und vierter Tunnelendpunkt-Identifikatoren, TEIDs, der Proxy-Vorrichtung,
wobei der erste Lastverteiler so konfiguriert ist, dass er eine erste Nachricht vom ersten Gateway empfängt, wobei die erste Nachricht einen der zweiten Tunnelendpunkt-Identifikatoren der Proxy-Vorrichtung als Header-Tunnelendpunkt-Identifikator enthält,
wobei der erste Lastverteiler ferner so konfiguriert ist, dass er einen der Knoten aus der Vielzahl von Knoten auswählt und die Nachricht an den ausgewählten Knoten weiterleitet,
wobei der ausgewählte Knoten so konfiguriert ist, dass er mit der Datenbank kommuniziert und die mit der Header-TEID der ersten Nachricht verbundene Zustandsinformation anfordert, wobei der ausgewählte Knoten ferner so konfiguriert ist, dass er eine Header-TEID der ersten Nachricht durch einen der dritten Tunnelendpunkt-Identifikatoren des zweiten Gateways ersetzt, wobei der ausgewählte Knoten so konfiguriert ist, dass er die erste Nachricht anschließend an das zweite Gateway weiterleitet, wobei der zweite Lastverteiler so konfiguriert ist, dass er eine zweite Nachricht vom zweiten Gateway empfängt, wobei die zweite Nachricht eine der vierten Tunnelendpunkt-Identifikatoren der Proxy-Vorrichtung als Header-Tunnelendpunkt-Identifikator enthält,
wobei der zweite Lastverteiler ferner so konfiguriert ist, dass er einen der Knoten aus der Vielzahl von Knoten auswählt und die zweite Nachricht an den ausgewählten Knoten weiterleitet, wobei der ausgewählte Knoten so konfiguriert ist, dass er mit der Datenbank kommuniziert und die mit der Header-TEID der zweiten Nachricht verbundene Zustandsinformation anfordert, wobei der ausgewählte Knoten ferner so konfiguriert ist, dass er die Header-TEID der zweiten Nachricht durch einen der ersten Tunnelendpunkt-Identifikatoren des ersten Gateways ersetzt, wobei der ausgewählte Knoten die zweite Nachricht anschließend an das erste Gateway weiterleitet.

2. Proxy-Vorrichtung nach Anspruch 1, wobei die Proxy-Vorrichtung das General Packet Radio Services (GPRS) Tunneling Protocol (GTP) verwendet.

3. Proxy-Vorrichtung nach Anspruch 1, wobei die Vielzahl von Knoten so konfiguriert ist, dass sie eine Vielzahl von Verbindungen zwischen dem ersten Gateway und dem zweiten Gateway bereitstellt.

4. Proxy-Vorrichtung nach einem der vorstehenden Ansprüche, wobei die erste Nachricht und die zweite Nachricht GTP-Steuerungsnachrichten sind und wobei die Verbindungen GTP-Tunnelverbindungen sind.

5. Proxy-Vorrichtung nach einem der vorstehenden Ansprüche, wobei der Header der GTP-Header ist, insbesondere der Header, der auf den UDP- oder TCP-Header folgt.

6. Proxy-Vorrichtung nach einem der vorstehenden Ansprüche, wobei die erste Nachricht vom ersten Gateway ferner einen Teilnehmer-Identifikator zum Identifizieren der Vorrichtung umfasst, für die die Verbindung hergestellt wird, wobei der ausgewählte Knoten ferner so konfiguriert ist, dass er den Teilnehmer-Identifikator und die TEID für die Verbindung zur Speicherung an die Datenbank bereitstellt,
wobei der Teilnehmer-Identifikator und die TEID für die Verbindung in Zuordnung zueinander und zur hergestellten Verbindung gespeichert werden.

7. Proxy-Vorrichtung nach einem der vorstehenden Ansprüche, wobei der ausgewählte Knoten ferner so konfiguriert ist, dass er den Tunnelverbindungs-Identifikator und/oder einen Vorrichtungs-Identifikator maskiert, bevor er sie der Datenbank zur Speicherung bereitstellt.

8. Proxy-Vorrichtung nach einem der vorstehenden Ansprüche, wobei mindestens ein Lastverteiler so konfiguriert ist, dass er den Knoten aus der Vielzahl von Tunneling-Knoten auswählt, indem er auf der Grundlage eines Lastkriteriums aus der Vielzahl von Tunneling-Knoten eine Auswahl trifft.

9. Proxy-Vorrichtung nach einem der vorstehenden Ansprüche, wobei der mindestens eine Lastverteiler so konfiguriert ist, dass er den Knoten aus der Vielzahl von Tunneling-Knoten auswählt, indem er nach einem Round-Robin-Verfahren aus der Vielzahl von Tunneling-Knoten auswählt.

10. Proxy-Vorrichtung nach Anspruch 9, wobei es sich bei den Tunnelendpunkt-Identifikatoren um Tunnelendpunkt-Identifikatoren gemäß dem GTP-Protokoll handelt, insbesondere gemäß dem GTP-Protokoll Version 1 oder Version 2.

11. Proxy-Vorrichtung nach einem der vorstehenden Ansprüche, wobei die Datenbank einen Schlüssel-Wert-Speicher umfasst.

12. Verfahren zum Herstellen einer Verbindung zwischen einem ersten Gateway und einem zweiten Gateway unter Verwendung einer Proxy-Vorrichtung in einem drahtlosen Kommunikationssystem, wobei das Verfahren die folgenden Schritte umfasst:
- Speichern von Zustandsinformationen zu Verbindungspaaren zwischen der Proxy-Vorrichtung und einem ersten Gateway sowie zwischen der Proxy-Vorrichtung und einem zweiten Gateway in einer Datenbank der Proxy-Vorrichtung, wobei die Zustandsinformationen zu einem Verbindungspaar Informationen umfassen über eine erste Verbindung zwischen der Proxy-Vorrichtung und dem ersten Gateway unter Verwendung erster Tunnelendpunkt-Identifikatoren, TEIDs, des ersten Gateways und zweite Tunnelendpunkt-Identifikatoren der Proxy-Vorrichtung sowie Informationen über eine zweite Verbindung zwischen der Proxy-Vorrichtung und dem zweiten Gateway unter Verwendung dritter Tunnelendpunkt-Identifikatoren des zweiten Gateways und vierter Tunnelendpunkt-Identifikatoren der Proxy-Vorrichtung,
- Empfangen einer ersten Nachricht vom ersten Gateway durch einen ersten Lastverteiler der Proxy-Vorrichtung, wobei die erste Nachricht einen der zweiten Tunnelendpunkt-Identifikatoren der Proxy-Vorrichtung als Header-Tunnel-Identifikator und optional die ersten Tunnelendpunkt-Identifikatoren des ersten Gateways als Ursprungs-Tunnelendpunkt-Identifikatoren enthält,
- Auswählen eines der Knoten aus einer Vielzahl von Knoten der Proxy-Vorrichtung durch den ersten Lastverteiler,
- Weiterleiten der Nachricht durch den Lastverteiler an den ausgewählten Knoten,
- Kommunizieren mit der Datenbank und Anfordern der Zustandsinformationen, die mit der Header-TEID der ersten Nachricht verbunden sind, durch den ausgewählten Knoten,
- Ersetzen der Header-TEID der ersten Nachricht durch einen der dritten Tunnelendpunkt-Identifikatoren des zweiten Gateways und optional Ersetzen der Ursprungs-TEID der ersten Nachricht durch die vierten Tunnelendpunkt-Identifikatoren der Proxy-Vorrichtung durch den ausgewählten Knoten, wobei der ausgewählte Knoten anschließend die erste Nachricht mit den ersetzten TEIDs an das zweite Gateway weiterleitet,
- Empfangen einer zweiten Nachricht vom zweiten Gateway durch einen zweiten Lastverteiler der Proxy-Vorrichtung, wobei die zweite Nachricht eine der vierten Tunnelendpunkt-Identifikatoren der Proxy-Vorrichtung als Header-Tunnel-Identifikator und optional die dritten Tunnel-Identifikatoren des zweiten Gateways als Ursprungs-Tunnelendpunkt-Identifikatoren enthält,
- Auswählen eines der Knoten aus der Vielzahl von Knoten der Proxy-Vorrichtung durch den zweiten Lastverteiler,
- Weiterleiten der zweiten Nachricht an den ausgewählten Knoten durch den zweiten Lastverteiler,
- Kommunizieren mit einem Speicher und Anfordern der mit der Header-TEID der zweiten Nachricht verbundenen Zustandsinformationen durch den ausgewählten Knoten,
- Ersetzen der Header-TEID der zweiten Nachricht durch einen der ersten Tunnelendpunkt-Identifikatoren des ersten Gateways und optional Ersetzen der Ursprungs-TEID der zweiten Nachricht durch die zweiten Tunnelendpunkt-Identifikatoren der Proxy-Vorrichtung durch den ausgewählten Knoten, wobei der ausgewählte Knoten anschließend die zweite Nachricht an das erste Gateway weiterleitet.

13. Verfahren nach einem der vorstehenden Ansprüche, wobei der Schritt des Auswählens den Knoten aus der Vielzahl von Tunneling-Knoten auswählt, indem aus der Vielzahl von Tunneling-Knoten nach einem Round-Robin-Verfahren oder auf der Grundlage eines Lastkriteriums ausgewählt wird.

14. Verfahren nach Anspruch 12, wobei die Datenbank eine Schlüssel-Wert-Datenbank ist und der Schritt des Kommunizierens mit der Schlüssel-Wert-Datenbank die Verwendung einer International Mobile Subscriber Identity (IMSI) als Schlüssel einschließt.

15. Computerprogrammprodukt, das Anweisungen umfasst, die, wenn sie von einem Prozessor ausgeführt werden, den Prozessor veranlassen, das Verfahren gemäß einem der Ansprüche 12 bis 14 durchzuführen.

## Revendications

1. Dispositif mandataire pour un système de communication sans fil, dans lequel le dispositif mandataire comprend :
une pluralité de nœuds (7, 8, 9) pour la fourniture d'une pluralité de connexions entre une première passerelle (4) et une deuxième passerelle (17) ;
un premier équilibreur de charge configuré pour gérer un trafic entrant en provenance de la première passerelle,
un deuxième équilibreur de charge configuré pour gérer un trafic entrant en provenance de la deuxième passerelle,
une base de données (16) configurée pour stocker une pluralité d'informations d'état pour une pluralité de connexions ;
dans lequel la base de données (16) est configurée pour stocker des informations d'état sur des paires de connexions entre le dispositif mandataire et une première passerelle et entre le dispositif mandataire et une deuxième passerelle, dans lequel les informations d'état sur une paire de connexions comprennent des informations sur
une première connexion entre le dispositif mandataire et la première passerelle à l'aide de premiers identifiants de point d'extrémité de tunnel, TEIDs, de la première passerelle et de deuxièmes identifiants de point d'extrémité de tunnel, TEIDs, du dispositif mandataire et des informations sur une deuxième connexion entre le dispositif mandataire et la deuxième passerelle à l'aide de troisièmes identifiants de point d'extrémité de tunnel, TEIDs, de la deuxième passerelle et de quatrièmes identifiants de point d'extrémité de tunnel, TEIDs, du dispositif mandataire,
dans lequel le premier équilibreur de charge est configuré pour recevoir un premier message en provenance de la première passerelle, dans lequel le premier message porte un des deuxièmes identifiants de point d'extrémité de tunnel du dispositif mandataire en tant qu'identifiant de point d'extrémité de tunnel d'en-tête,
dans lequel le premier équilibreur de charge est configuré en outre pour sélectionner un des nœuds de la pluralité de nœuds et pour transférer le message au nœud sélectionné,
dans lequel le nœud sélectionné est configuré pour communiquer avec la base de données et pour demander les informations d'état associées au TEID d'en-tête du premier message, dans lequel le nœud sélectionné est configuré en outre pour remplacer un TEID d'en-tête du premier message par un des troisièmes identifiants de point d'extrémité de tunnel de la deuxième passerelle, dans lequel le nœud sélectionné est configuré pour transférer ensuite le premier message à la deuxième passerelle, dans lequel le deuxième équilibreur de charge est configuré pour recevoir un deuxième message en provenance de la deuxième passerelle, dans lequel le deuxième message porte un des quatrièmes identifiants de point d'extrémité de tunnel du dispositif mandataire en tant qu'identifiant de point d'extrémité de tunnel d'en-tête,
dans lequel le deuxième équilibreur de charge est configuré en outre pour sélectionner un des nœuds de la pluralité de nœuds, pour transférer le deuxième message au nœud sélectionné, dans lequel le nœud sélectionné est configuré pour communiquer avec la base de données et pour demander les informations d'état associées au TEID d'en-tête du deuxième message, dans lequel le nœud sélectionné est configuré en outre pour remplacer le TEID d'en-tête du deuxième message par un des premiers identifiants de point d'extrémité de tunnel de la première passerelle, dans lequel le nœud sélectionné transfère ensuite le deuxième message à la première passerelle.

2. Dispositif mandataire selon la revendication 1, dans lequel le dispositif mandataire utilise le protocole de tunnelisation de services généraux de radiocommunication par paquets, GPRS, GTP.

3. Dispositif mandataire selon la revendication 1, dans lequel la pluralité de nœuds est configurée pour fournir une pluralité de connexions entre la première passerelle et la deuxième passerelle.

4. Dispositif mandataire selon l'une quelconque des revendications précédentes, dans lequel le premier message et le deuxième message sont des messages de commande GTP et dans lequel les connexions sont des connexions tunnel GTP.

5. Dispositif mandataire selon l'une quelconque des revendications précédentes, dans lequel l'en-tête est l'en-tête GTP, en particulier l'en-tête suivant l'en-tête UDP ou TCP.

6. Dispositif mandataire selon l'une quelconque des revendications précédentes, dans lequel le premier message en provenance de la première passerelle comprend en outre un identifiant d'abonné pour l'identification du dispositif pour lequel la connexion est établie, dans lequel le nœud sélectionné est configuré en outre pour fournir l'identifiant d'abonné et le TEID pour la connexion à la base de données à des fins de stockage,
moyennant quoi l'identifiant d'abonné et le TEID pour la connexion sont stockés en association l'un avec l'autre et avec la connexion établie.

7. Dispositif mandataire selon l'une quelconque des revendications précédentes, dans lequel le nœud sélectionné est configuré en outre pour masquer l'identifiant de connexion tunnel et/ou un identifiant de dispositif avant sa fourniture à la base de données à des fins de stockage.

8. Dispositif mandataire selon l'une quelconque des revendications précédentes, dans lequel au moins un équilibreur de charge est configuré pour sélectionner le nœud parmi la pluralité de nœuds de tunnelisation par sélection parmi la pluralité de nœuds de tunnelisation sur la base d'un critère de charge.

9. Dispositif mandataire selon l'une quelconque des revendications précédentes, dans lequel l'au moins un équilibreur de charge est configuré pour sélectionner le nœud parmi la pluralité de nœuds de tunnelisation par sélection parmi la pluralité de nœuds de tunnelisation à la manière d'un tourniquet.

10. Dispositif mandataire selon la revendication 9, dans lequel les identifiants de point d'extrémité de tunnel sont des identifiants de point d'extrémité de tunnel selon le protocole GTP, en particulier le protocole GTP version 1 ou version 2.

11. Dispositif mandataire selon l'une quelconque des revendications précédentes, dans lequel la base de données comprend un stockage de valeurs clés.

12. Procédé de fourniture d'une connexion entre une première passerelle et une deuxième passerelle à l'aide d'un dispositif mandataire dans un système de communication sans fil, le procédé comprenant les étapes de
- stockage, par une base de données du dispositif mandataire, d'informations d'état sur des paires de connexions entre le dispositif mandataire et une première passerelle et entre le dispositif mandataire et une deuxième passerelle, dans lequel les informations d'état sur une paire de connexions comprennent des informations sur une première connexion entre le dispositif mandataire et la première passerelle à l'aide de premiers identifiants de point d'extrémité de tunnel, TEIDs, de la première passerelle et de deuxièmes identifiants de point d'extrémité de tunnel du dispositif mandataire et des informations sur une deuxième connexion entre le dispositif mandataire et la deuxième passerelle à l'aide de troisièmes identifiants de point d'extrémité de tunnel de la deuxième passerelle et de quatrièmes identifiants de point d'extrémité de tunnel du dispositif mandataire,
- réception, par un premier équilibreur de charge du dispositif mandataire, d'un premier message en provenance de la première passerelle, dans lequel le premier message porte un des deuxièmes identifiants de point d'extrémité de tunnel du dispositif mandataire en tant qu'identifiant de tunnel d'en-tête et en option les premiers identifiants de point d'extrémité de tunnel de la première passerelle en tant qu'identifiants de point d'extrémité de tunnel d'origine,
- sélection, par le premier équilibreur de charge, d'un des nœuds d'une pluralité de nœuds du dispositif mandataire,
- transfert, par l'équilibreur de charge, du message au nœud sélectionné,
- communication, par le nœud sélectionné, avec la base de données et demande des informations d'état associées au TEID d'en-tête du premier message,
- remplacement, par le nœud sélectionné, du TEID d'en-tête du premier message par un des troisièmes identifiants de point d'extrémité de tunnel de la deuxième passerelle et en option remplacement du TEID d'origine du premier message par les quatrièmes identifiants de point d'extrémité de tunnel du dispositif mandataire, dans lequel le nœud sélectionné transfère ensuite le premier message avec les TEIDs remplacés à la deuxième passerelle,
- réception, par un deuxième équilibreur de charge du dispositif mandataire, d'un deuxième message en provenance de la deuxième passerelle, dans lequel le deuxième message porte un des quatrièmes identifiants de point d'extrémité de tunnel du dispositif mandataire en tant qu'identifiant de tunnel d'en-tête et en option les troisièmes identifiants de tunnel de la deuxième passerelle en tant qu'identifiants de point d'extrémité de tunnel d'origine,
- sélection, par le deuxième équilibreur de charge, d'un des nœuds de la pluralité de nœuds du dispositif mandataire,
- transfert, par le deuxième équilibreur de charge, du deuxième message au nœud sélectionné,
- communication, par le nœud sélectionné, avec une mémoire et demande des informations d'état associées au TEID d'en-tête du deuxième message,
- remplacement, par le nœud sélectionné, du TEID d'en-tête du deuxième message par un des premiers identifiants de point d'extrémité de tunnel de la première passerelle et en option remplacement du TEID d'origine du deuxième message par les deuxièmes identifiants de point d'extrémité de tunnel du dispositif mandataire, dans lequel le nœud sélectionné transfère ensuite le deuxième message à la première passerelle.

13. Procédé selon l'une quelconque des revendications précédentes, dans lequel l'étape de sélection sélectionne le nœud parmi la pluralité de nœuds de tunnelisation par sélection parmi la pluralité de nœuds de tunnelisation à la manière d'un tourniquet ou sur la base d'un critère de charge.

14. Procédé selon la revendication 12, dans lequel la base de données est un stockage de valeurs clés et l'étape de communication avec le stockage de valeurs clés comporte l'utilisation d'une identité internationale d'abonnement mobile, IMSI, en tant que clé.

15. Produit de programme informatique comprenant des instructions lesquelles, lorsqu'elles sont exécutées par un processeur, amènent le processeur à réaliser le procédé selon l'une quelconque des revendications 12 à 14.
